# FASCICULE DE BREVET EUROPEEN

(11) **EP 3 155 941 B1**
(45) Date de publication et mention de la délivrance du brevet: **22.08.2018**
(21) Numéro de dépôt: 16193169.6
(22) Date de dépôt: 10.10.2016
(51) Int. Cl.: A47J 45/06, A47J 37/10

(54) **RECIPIENT DE CUISSON COMPORTANT UN SUPPORT DE CAPTEUR**
GARBEHÄLTER MIT EINEM SENSORTRÄGER
COOKING VESSEL COMPRISING A SENSOR SUPPORT

(30) Priorité: 12.10.2015 FR 1559693
(43) Date de publication de la demande: 19.04.2017
(73) Titulaire: SEB S.A., 69130 Ecully (FR)
(72) Inventeur: MAGNOULOUX, Guy, 74330 Epagny (FR); DEMOLIS, Michel, 01200 Lancrans (FR); LINGLIN, Benoît, 74370 Saint Martin Bellevue (FR)
(74) Mandataire: Bourrières, Patrice

(56) Documents cités:
- EP-A1- 1 745 729
- WO-A1-2015/033060
- US-A1- 2007 095 215

## Description

La présente invention concerne un récipient de cuisson destiné à être disposé sur une plaque de cuisson, un brûleur ou analogue pour la cuisson d'aliments notamment une poêle, une casserole, une sauteuse, un faitout ou un autocuiseur, plus particulièrement un récipient de cuisson muni d'une calotte comportant un capteur, notamment de température.

On connaît du document DE20203566 un récipient de cuisson comportant une calotte munie d'un fond et d'une paroi latérale, une poignée fixée à la calotte par des moyens de fixation et un capteur agencé dans un logement à proximité du fond et muni de deux éléments conducteurs isolés électriquement. Les moyens de fixation comportent une partie agencée sur la calotte et une partie sur la poignée. Le capteur et les éléments conducteurs sont fixés à un support qui s'étend à partir du fond, le long de la paroi latérale. Le support est fixé de manière rigide à la poignée.

Ainsi, la poignée munie de sa partie des moyens de fixation et le support muni du capteur forment un sous-ensemble qui peut être fabriqué indépendamment du reste du récipient de cuisson. Dans ce sous-ensemble, la position entre le capteur et la partie des moyens de fixation peut varier autour d'une valeur théorique et prendre une valeur minimum ou une valeur maximum, du fait des tolérances de fabrication. La calotte munie de sa partie des moyens de fixation de la poignée et du logement de réception du capteur forme également un sous-ensemble. La position entre le logement de réception du capteur et la partie des moyens de fixation agencée sur la calotte peut varier également autour d'une valeur théorique et prendre une valeur minimum ou une valeur maximum, du fait des tolérances de fabrication.

Lors de l'assemblage final du sous-ensemble poignée sur le sous-ensemble calotte, le capteur est positionné de manière ajustée dans son logement et la partie des moyens de fixation de la poignée est assemblée également de manière ajustée dans la partie des moyens de fixation de la calotte. Dans le cas où, par exemple, la position entre le capteur et la partie des moyens de fixation de la poignée présente une valeur proche de la valeur minimum et inversement, lorsque la position entre le logement de réception du capteur et la partie des moyens de fixation présente une valeur proche de la valeur maximum, des tensions vont apparaitre dans le support et le capteur, notamment au niveau de la zone de fixation du support sur la poignée, étant donné que la fixation de la poignée sur la calotte est solide et ajustée.

De plus, en fonctionnement, les dilatations différentielles de la calotte et du support vont générer également des tensions au niveau du support et du capteur.

Ainsi, en utilisation, ces tensions peuvent altérer le fonctionnement du capteur, détériorer les éléments conducteurs ou casser le support. En conséquence, le récipient de cuisson risque de ne plus présenter les fonctionnalités apportées par le capteur.

Le but de la présente invention est de remédier aux inconvénients précités et de proposer un récipient de cuisson muni d'un capteur qui présente un fonctionnement fiable et répétitif, durable dans le temps.

Un autre but de l'invention est de proposer un récipient de cuisson muni d'un capteur qui soit de conception simple et économique à mettre en oeuvre.

Ces buts sont atteints avec un récipient de cuisson comportant une calotte munie d'un fond et d'une paroi latérale, une poignée fixée à la calotte par des moyens de fixation et un capteur agencé dans un logement de réception à proximité du fond et muni d'au moins un élément conducteur isolé électriquement, lesdits capteur et élément conducteur étant fixés à un support qui s'étend à partir du fond le long de la paroi latérale et qui est fixé à la poignée, caractérisé en ce que le support comporte une partie de maintien du capteur et de l'élément conducteur et au moins une zone de déformation programmée pour permettre une mobilité suivant au moins une direction entre la partie de maintien du capteur et de l'élément conducteur et la poignée.

Ainsi, la poignée munie d'une partie des moyens de fixation, le capteur et le support forme avantageusement un premier sous-ensemble et la calotte munie d'une partie des moyens de fixation de la poignée et du logement du capteur forme un deuxième sous-ensemble.

Lors de l'assemblage des deux sous-ensembles, la zone de déformation programmée permet d'absorber les dispersions de position entre le logement du capteur et la partie des moyens de fixation de la poignée agencée sur la calotte du deuxième sous-ensemble et entre la partie des moyens de fixation de la poignée et le capteur du premier sous-ensemble.

Par zone de déformation programmée, on comprend une zone prévue pour se déformer de façon préférentielle avant la partie de maintien du capteur et de l'élément conducteur. Les dimensions et la matière de la zone de déformation sont choisis pour permettre d'obtenir une amplitude de déformation compatible avec les dispersions de position entre le logement du capteur et la partie des moyens de fixation de la poignée agencée sur la calotte du deuxième sous-ensemble et les dispersions de position entre le capteur et la partie des moyens de fixation de la poignée du premier sous-ensemble, sans générer de sollicitations néfastes sur les composants sensibles comme le capteur.

De manière avantageuse, la zone de déformation programmée se déforme de manière élastique. Ainsi, la zone de déformation programmée peut retrouver sa forme d'origine après avoir été déformée.

De préférence, le support comporte une zone de déformation programmée qui présente une forme en S.

La forme en S est reliée par une première extrémité à la partie de maintien du capteur et de l'élément conducteur et par une deuxième extrémité à une partie de fixation du support qui est reliée à la poignée. La fibre neutre de la forme en S est allongée, notamment par rapport à la fibre neutre d'une forme droite, pour permettre une plus grande mobilité.

Ainsi, cette disposition permet d'obtenir une mobilité entre la partie de maintien du capteur et de l'élément conducteur et la poignée, notamment dans une direction perpendiculaire au plan dans lequel est comprise la forme en S.

De manière avantageuse, la forme en S présente une section transversale S1 et la partie de maintien du capteur et de l'élément conducteur présente une section transversale S2, S1 étant inférieure au tiers de S2.

Ce rapport de section permet d'obtenir une partie de maintien du capteur et de l'élément conducteur rigide et une forme en S déformable qui constitue la zone de déformation programmée.

Avantageusement, le support comporte une partie de fixation agencée dans un logement de la poignée et le support comporte une zone de déformation programmée formée par deux languettes souples agencées en opposition sur la partie de fixation et qui coopèrent avec deux faces d'appui du logement de la poignée.

Les languettes souples permettent un déplacement de la partie de fixation du support dans son logement. Cette disposition permet d'obtenir une mobilité entre la partie de maintien du capteur et de l'élément conducteur et la poignée.

Avantageusement, les deux languettes souples comportent deux extrémités libres anguleuses qui forment des moyens anti retour de type harpon une fois la partie de fixation insérée dans le logement.

Cette disposition permet de réaliser une fonction de maintien du support dans la poignée sans ajouter de pièces supplémentaires, ce qui est particulièrement économique.

De préférence, le support est réalisé en un matériau métallique, notamment un inox austénitique non ferromagnétique.

Le support réalisé en un matériau métallique est adapté à supporter les températures élevées, notamment à proximité du fond de la calotte. Un support réalisé en un inox austénitique non ferromagnétique permet, lors d'une utilisation du récipient de cuisson avec un moyen de chauffage par induction, d'obtenir un support qui ne couple pas avec le moyen de chauffage par induction.

Avantageusement, la partie de maintien du capteur et de l'élément conducteur présente une section transversale sensiblement constante, notamment en forme de U aplati.

Cette disposition permet de réaliser le support de manière économique, notamment à partir d'un feuillard métallique mis en forme de U par frappe.

Avantageusement, le support comporte des pattes de maintien de l'élément conducteur.

De préférence, le capteur et une partie de l'élément conducteur sont encapsulés dans une enveloppe tubulaire métallique et le support comporte deux pattes de fixation de l'enveloppe tubulaire, les deux pattes de fixation présentant un effet ressort de maintien de l'enveloppe tubulaire sur le support.

Ces dispositions permettent, notamment lorsque le support est fabriqué à partir d'un feuillard métallique découpé puis mis en forme par frappe, de prévoir les pattes directement dans la découpe et ainsi, ne pas rajouter de pièces pour réaliser la fonction maintien de l'élément conducteur et fixation de l'enveloppe tubulaire du capteur.

Ainsi, le support muni des pattes de maintien de l'élément conducteur et des pattes de fixation de l'enveloppe tubulaire du capteur est constitué par une seule pièce.

Avantageusement, la paroi latérale comporte une rainure et la partie de maintien du capteur et de l'élément conducteur est agencée dans la rainure.

Cette disposition permet d'intégrer le support dans la calotte pour ne pas avoir de parties proéminentes et ainsi faciliter le nettoyage et améliorer l'esthétique.

De préférence, les moyens de fixation de la poignée sur la calotte comportent un goujon soudé à la calotte, ledit goujon coopérant avec un logement dans la poignée.

Avantageusement, le capteur est un capteur de température, notamment une CTN ou un thermocouple.

Par CTN, on comprend une thermistance à Coefficient de Température Négatif.

De préférence, l'article culinaire est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective éclatée d'un récipient de cuisson selon un mode particulier de réalisation de l'invention.
- La figure 2 illustre une vue en perspective du sous-ensemble poignée du récipient de cuisson de la figure 1.
- La figure 3 illustre une vue de détail en perspective éclatée du sous-ensemble poignée de la figure 2.
- La figure 4 illustre une vue en perspective du support qui est dans une position intermédiaire d'assemblage pour former le sous-ensemble poignée de la figure 2.
- La figure 5 illustre une vue en perspective éclatée du sous-ensemble poignée de la figure 2.
- La figure 6 illustre une vue de détail du dessus de l'extrémité libre de la poignée sans le capot du sous-ensemble poignée de la figure 2.

On notera que, dans ce document, les termes «horizontal», «vertical», «inférieur», «supérieur», «longitudinal», «transversal», «haut», «bas», employés pour décrire le récipient de cuisson, font référence à ce récipient de cuisson en situation d'usage, lorsqu'il est posé sur un plan horizontal.

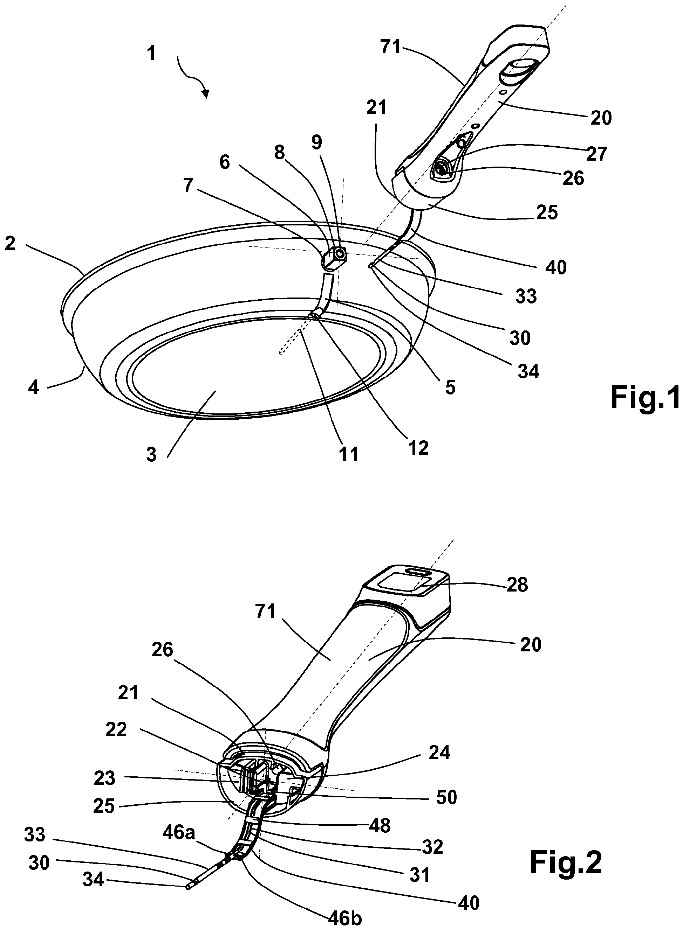

Tel que visible aux figures 1 et 2, un récipient de cuisson 1 comporte une calotte 2 comprenant un fond 3 et une paroi latérale 4. La calotte 2 est réalisée en aluminium, par exemple par frappe d'un disque ou par une opération de fonderie. Le fond 3 présente une épaisseur dans laquelle est agencé un logement de réception 11 d'un capteur 30. Le logement de réception 11 forme un tunnel qui comporte une ouverture 12 dans la paroi latérale 4 et qui s'étend, à partir de cette ouverture 12, radialement vers le centre du fond 3.

Le récipient de cuisson 1 comporte une poignée 20 qui s'étend radialement à la calotte 2 suivant une direction longitudinale. La poignée 20 est agencée sur la paroi latérale 4 de la calotte 2 par des moyens de fixation 6, 22. La calotte 2 comporte une partie des moyens de fixation formés par un goujon 6 soudé. Le goujon 6 présente une forme générale d'un parallélépipède rectangle qui comprend une première extrémité 7 adaptée à être fixée à la calotte 2, ainsi qu'une deuxième extrémité 8 comprenant un trou borgne taraudé 9.

La poignée 20 comporte une extrémité 21 munie d'une partie des moyens de fixation qui est formée par un logement 22 de réception du goujon 6. L'extrémité 21 de la poignée 20 comporte deux protubérances 23, 24 et une embase 25 entourant les deux protubérances 23, 24 qui forment le logement 22 de réception du goujon 6. L'extrémité 21 de la poignée 20 comporte un orifice 26 traversant épaulé, réalisé dans le prolongement du logement 22. L'orifice 26 est destiné à recevoir une vis 27 apte à coopérer avec le trou borgne taraudé 9 du goujon 6.

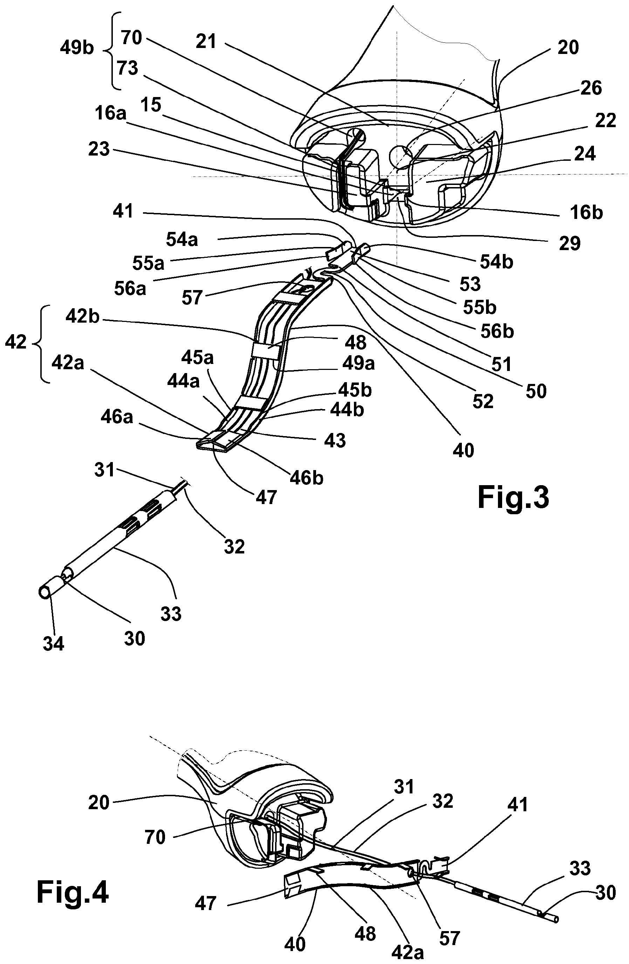

Tel que visible à la figure 3, le capteur 30 de température peut être formé par une CTN ou un thermocouple. Par CTN, on comprend une thermistance à Coefficient de Température Négatif. Le capteur 30 de température est muni de deux éléments conducteurs 31, 32 isolés qui sont agencés dans une enveloppe tubulaire 33 en acier inoxydable, obturée à une extrémité 34. Le capteur 30 de température est positionné au fond de l'enveloppe tubulaire 33, à proximité de l'extrémité 34 obturée. L'enveloppe tubulaire 33 est adaptée à être insérée complètement dans le logement de réception 11 pour que le capteur 30 soit maintenu en position de manière ajustée, quasiment sans jeu. Les éléments conducteurs 31, 32 sont reliés électriquement à un circuit de contrôle 28 (Fig. 2) apte à traiter la grandeur mesurée par le capteur de température. Le circuit de contrôle 28 est agencé dans la poignée 20 et peut comporter, par exemple, des moyens de traitement et d'affichage et/ou des moyens de communication avec un moyen de chauffage.

Conformément à la figure 3, le récipient de cuisson 1 comporte un support 40 comprenant, à une première extrémité, une partie de fixation 41 apte à coopérer avec un logement 29 agencé à l'extrémité 21 de la poignée 20. Le logement 29 présente une forme parallélépipédique et comporte une ouverture rectangulaire 15. Le logement 29 est agencé sous le logement 22 de réception du goujon 6. Le support 40 comporte une partie de maintien 42 de l'enveloppe tubulaire et des éléments conducteurs. La partie de maintien 42 comporte une partie de maintien 42a de l'enveloppe tubulaire 33 et une partie de maintien 42b des éléments conducteurs 31, 32. La partie de maintien 42a est agencée à une deuxième extrémité du support 40.

Le support 40 est fabriqué à partir d'un feuillard métallique, découpé puis mis en forme par frappe. La partie de maintien 42 de l'enveloppe tubulaire et des éléments conducteurs présente une section transversale en forme de U aplati, sensiblement constante. La section transversale présente une face plane 43 et deux bords latéraux 44a, 44b comprenant chacun, une extrémité libre 45a, 45b.

La partie de maintien 42a de l'enveloppe tubulaire 33 comporte deux pattes 46a, 46b qui s'étendent depuis les extrémités libres 45a, 45b des bords latéraux 44a, 44b, au-dessus de la face plane 43 pour former un logement 47 de réception de l'enveloppe tubulaire 33. Les deux pattes 46a, 46b de fixation présentent un effet ressort de maintien de l'enveloppe tubulaire 33 sur la face plane 43 du support 40. La partie de maintien 42b des éléments conducteurs 31, 32 comporte des pattes 48 qui s'étendent depuis l'extrémité libre 45a du bord latéral 44a, au-dessus de la face plane 43 pour former une partie 49a d'une zone 49 de réception des éléments conducteurs 31, 32.

Le support 40 comporte une zone de déformation programmée 50 qui présente une forme en S. La forme en S est reliée par une première extrémité 51 à la partie de maintien 42 de l'enveloppe tubulaire et des éléments conducteurs et par une deuxième extrémité 52 à la partie de fixation 41 du support 40 qui est reliée à la poignée 20. La forme en S présente une section transversale rectangulaire.

Ainsi, la partie de maintien 42 de l'enveloppe tubulaire et des éléments conducteurs est mobile par rapport à la poignée 20, notamment dans une direction sensiblement verticale, perpendiculaire au plan dans lequel est comprise la forme en S.

La partie de fixation 41 du support 40 présente une section transversale en forme de U aplati qui comporte une face plane 53 et deux bords latéraux 54a, 54b. La forme en U aplati de la partie de fixation 41 est dimensionnée pour être insérée dans le logement 29 de la poignée 20. Deux languettes souples 55a, 55b s'étendent longitudinalement depuis les deux bords latéraux 54a, 54b, vers l'extérieur du U. Le support 40 comporte une zone de déformation programmée formées par les languettes souples 55a, 55b agencées en opposition sur la partie de fixation 41. Les languettes souples 55a, 55b comportent deux extrémités libres 56a, 56b qui coopèrent avec deux faces 16a, 16b d'appui opposées du logement 29 de la poignée 20. La face plane 53 du U aplati est comprise dans le plan dans lequel est comprise la forme en S.

La partie de fixation 41 du support 40 peut se déplacer dans son logement 29 transversalement à la direction longitudinale, dans une direction sensiblement horizontale. Ainsi, la partie de maintien 42 de l'enveloppe tubulaire et des éléments conducteurs est mobile par rapport à la poignée 20 dans une direction horizontale, perpendiculaire à la direction verticale.

Le support 40 comporte dans la face plane 43 une perforation 57. La perforation 57 est agencée à l'extrémité de la partie de maintien 42b des éléments conducteurs 31, 32, à proximité de zone de déformation programmée 50. Les éléments conducteurs 31, 32 sont positionnés dans la perforation 57 pour passer de la partie 49a à une partie 49b de la zone 49 de réception des éléments conducteurs 31, 32.

La paroi latérale 4 comporte une rainure 5 (Fig. 1) s'étendant à partir de l'ouverture 12 du logement de réception 11 du capteur 30, vers le haut de la paroi latérale 4 jusque sous le goujon 6. La rainure 5 est destinée à recevoir le support 40, une fois la gaine tubulaire 33 introduite dans le logement de réception 11.

Tel que visible aux figures 3 et 4, les éléments conducteurs 31, 32 sont agencés dans le support 40 dans la partie 49a de la zone 49 de réception et dans la poignée 20 dans la partie 49b de la zone 49 de réception des éléments conducteurs 31, 32. La partie 49b s'étend dans la poignée majoritairement selon la direction longitudinale. La partie 49b comporte à l'extrémité 21 un conduit 70 (Fig.3) et un canal 73 de guidage des éléments conducteurs agencé à coté de la protubérance 23.

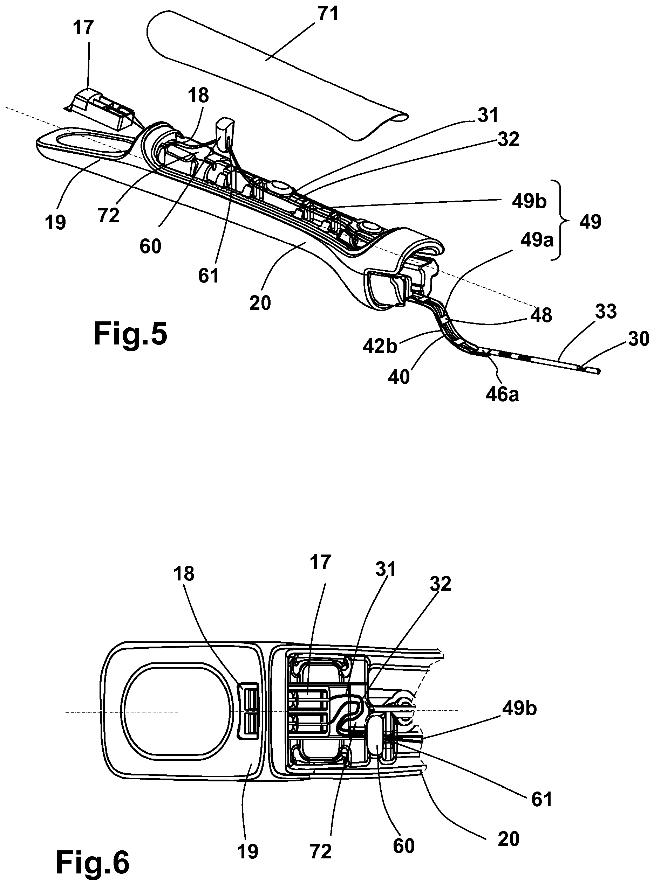

Conformément aux figures 5 et 6, un dispositif de frein 60 des éléments conducteurs 31, 32 est agencé dans la poignée 20. Le dispositif de frein est formé par un plot 60 en silicone qui comporte une fente 61. Les éléments conducteurs 31, 32 sont positionnés dans la fente 61 qui est orientée selon la direction longitudinale. Les éléments conducteurs 31, 32 sont reliés à un organe de connexion 17 du circuit de contrôle 28. La poignée 20 comporte une extrémité libre 19 munie d'une ouverture 18 qui s'étend selon la direction longitudinale. L'organe de connexion 17 est agencé dans l'ouverture 18. La poignée 20 comporte un logement de réception 72 d'une partie résiduelle des éléments conducteurs 31, 32 qui forment au moins une boucle. Le logement de réception 72 est agencé entre le plot 60 en silicone et l'organe de connexion 17. L'ouverture 18 débouche dans le logement de réception 72.

Un capot 71 est fixé sur la poignée 20. Le capot 71 recouvre la partie 49b de la zone 49 de réception des éléments conducteurs 31, 32, le logement de réception 72 de la partie résiduelle des éléments conducteurs 31, 32 et le plot 60 en silicone.

Le récipient de cuisson 1 comporte deux sous-ensembles qui peuvent être fabriqués indépendamment et réunis lors d'une opération d'assemblage final. Un premier sous-ensemble appelé sous-ensemble poignée est formé par la poignée 20 munie du logement 22 de réception du goujon 6, le support 40, les éléments conducteurs 31, 32 et le capteur 30 muni de son enveloppe tubulaire 33. Un deuxième sous-ensemble appelé sous-ensemble calotte est formé par la calotte 2 munie du goujon 6, du logement de réception 11 du capteur 30 et de la rainure 5.

Le procédé d'assemblage du sous-ensemble poignée comporte les étapes suivantes :
- Assembler le capteur 30 muni des éléments conducteurs 31, 32 dans la gaine tubulaire 33 et relier les éléments conducteurs 31, 32 à l'organe de connexion 17,
- Faire passer la gaine tubulaire 33 dans l'ouverture 18 de l'extrémité libre 19 de la poignée 20 puis faire passer la gaine tubulaire 33 dans le conduit 70,
- Introduire les éléments conducteurs 31, 32 dans la fente 61 du plot 60 en silicone puis positionner le plot 60 en silicone dans la poignée 20,
- Pré-positionner les éléments conducteurs 31, 32 dans la partie 49b de la zone 49 de réception et dans le logement de réception 72, une partie des éléments conducteurs 31, 32 et l'organe de connexion 17 dépassant de l'ouverture 18 et une partie des éléments conducteurs 31, 32 et la gaine tubulaire dépassant du conduit 70, puis fixer le capot 71 sur la poignée 20, notamment par collage.

On peut considérer qu'à ce stade de l'assemblage, on a réalisé un pré sous-ensemble poignée standard pour une famille de récipient de cuisson.

Pour terminer le sous-ensemble poignée, le procédé d'assemblage comporte les étapes suivantes :
- faire passer la gaine tubulaire dans la perforation 57 du support 40 (Fig. 4) et mettre en place la partie de fixation 41 dans le logement 29 de la poignée 20,
- insérer en force l'enveloppe tubulaire 33 dans le logement 47 de réception pour fixer le capteur 30 sur le support 40,
- ranger les éléments conducteurs 31, 32 dans la partie de maintien 42b et plier les pattes 48 pour former la partie 49a de la zone 49 de réception,
- réaliser la mise en tension des éléments conducteurs 31, 32 dans la zone 49 de réception en exerçant une traction sur l'organe de connexion 17 et/ou sur les éléments conducteurs 31, 32, le dispositif de frein formé par le plot 60 autorisant un déplacement des éléments conducteurs dans le sens de la traction, la zone 49 de réception étant formée par la partie 49b dans la poignée 20 et par la partie 49a dans le support 40,
- réaliser la mise en place de l'organe de connexion 17 dans l'ouverture 18 ainsi que la partie résiduelle des éléments conducteurs 31, 32 dans le logement de réception 72 de la poignée 20, la partie résiduelle des éléments conducteurs 31, 32 formant au moins une boucle, le dispositif de frein empêchant alors le déplacement des éléments conducteurs 31, 32 dans le sens opposé au sens de la traction lors de la formation de la boucle.

Lors de l'opération d'assemblage final, le logement 22 de la poignée 20 est assemblé de manière ajustée sur le goujon 6 et l'enveloppe tubulaire 33 est insérée de manière ajustée dans le logement de réception 11. Lors de cette opération, les zones de déformation programmée 50, 55a, 55b permettent d'absorber les dispersions dimensionnelles des deux sous-ensembles.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la forme de S de la zone de déformation programmée du support peut prendre une autre forme, notamment une ou plusieurs formes droites qui s'étendent parallèlement entre la partie de fixation et la partie de maintien du capteur et de l'élément conducteur.

## Revendications

1. Récipient de cuisson (1) comportant une calotte (2) munie d'un fond (3) et d'une paroi latérale (4), une poignée (20) fixée à la calotte (2) par des moyens de fixation (6, 22) et un capteur (30) agencé dans un logement de réception (11) à proximité du fond (3) et muni d'au moins un élément conducteur (31, 32) isolé électriquement, lesdits capteur (30) et élément conducteur (31, 32) étant fixés à un support (40) qui s'étend à partir du fond (3) le long de la paroi latérale (4) et qui est fixé à la poignée (20), **caractérisé en ce que** le support (40) comporte une partie de maintien (42) du capteur et de l'élément conducteur et au moins une zone de déformation programmée (50, 55a, 55b) pour permettre une mobilité entre la partie de maintien (42) du capteur et de l'élément conducteur et la poignée (20) suivant au moins une direction.

2. Récipient de cuisson (1) selon la revendication 1, **caractérisé en ce que** le support (40) comporte une zone de déformation programmée (50) qui présente une forme de S.

3. Récipient de cuisson (1) selon l'une quelconque des revendications précédentes, **caractérisé en ce que** le support (40) comporte une partie de fixation (41) agencée dans un logement (29) de la poignée (20) et **en ce que** le support (40) comporte une zone de déformation programmée formée par deux languettes souples (55a, 55b) agencées en opposition sur la partie de fixation (41) et qui coopèrent avec deux faces (16a, 16b) d'appui du logement (29) de la poignée (20).

4. Récipient de cuisson (1) selon la revendication 3, **caractérisé en ce que** les deux languettes souples (55a, 55b) comportent deux extrémités libres (56a, 56b) anguleuses qui forment des moyens anti retour de type harpon une fois la partie de fixation (41) insérée dans le logement.

5. Récipient de cuisson (1) selon l'une quelconque des revendications précédentes, **caractérisé en ce que** le support (40) est réalisé en un matériau métallique, notamment un inox austénitique non ferromagnétique.

6. Récipient de cuisson (1) selon l'une quelconque des revendications précédentes, **caractérisé en ce que** la partie de maintien (42) du capteur et de l'élément conducteur présente une section transversale sensiblement constante, notamment en forme de U aplati.

7. Récipient de cuisson (1) selon l'une quelconque des revendications précédentes, **caractérisé en ce que** le support (40) comporte des pattes (48) de maintien de l'élément conducteur (31, 32).

8. Récipient de cuisson (1) selon l'une quelconque des revendications précédentes, **caractérisé en ce que** le capteur (30) et une partie de l'élément conducteur (31, 32) sont encapsulés dans une enveloppe tubulaire (33) métallique et **en ce que** le support (40) comporte deux pattes (46a, 46b) de fixation de l'enveloppe tubulaire (33), les deux pattes (46a, 46b) de fixation présentant un effet ressort de maintien de l'enveloppe tubulaire (33) sur le support (40).

9. Récipient de cuisson (1) selon l'une quelconque des revendications précédentes, **caractérisé en ce que** la paroi latérale (4) comporte une rainure (5) et **en ce que** la partie de maintien (42) du capteur et de l'élément conducteur est agencée dans la rainure (5).

10. Récipient de cuisson (1) selon l'une quelconque des revendications précédentes, **caractérisé en ce que** les moyens de fixation de la poignée sur la calotte comportent un goujon (6) soudé à la calotte, ledit goujon (6) coopérant avec un logement (22) dans la poignée (20).

11. Récipient de cuisson (1) selon l'une quelconque des revendications précédentes, **caractérisé en ce que** le capteur (30) est un capteur de température, notamment une CTN ou un thermocouple.

12. Récipient de cuisson (1) selon l'une des revendications 1 à 11, **caractérisé en ce qu'**il est une poêle, une casserole, une sauteuse, un faitout ou un autocuiseur.

## Patentansprüche

1. Kochgefäß (1), aufweisend eine Kalotte (2), die mit einem Boden (3) und einer Seitenwand (4) versehen ist, einen Griff (20), der an der Kalotte (2) durch Befestigungsmittel (6, 22) befestigt ist, und einen Sensor (30), der in einem Aufnahmesitz (11) nahe dem Boden (3) angeordnet ist und mit mindestens einem elektrisch isolierten leitfähigen Element (31, 32) versehen ist, wobei der Sensor (30) und das leitfähige Element (31, 32) an einem Träger (40) befestigt sind, der sich ausgehen von dem Boden (3) entlang der Seitenwand (4) erstreckt und an dem Griff (20) befestigt ist, **dadurch gekennzeichnet, dass** der Träger (40) ein Teil zum Halten (42) des Sensors und des leitfähigen Elements und mindestens einen programmierten Verformungsbereich (50, 55a, 55b) aufweist, um eine Beweglichkeit zwischen dem Teil zum Halten (42) des Sensors und des leitfähigen Elements und dem Griff (20) in mindestens einer Richtung zu ermöglichen.

2. Kochgefäß (1) nach Anspruch 1, **dadurch gekennzeichnet, dass** der Träger (40) einen programmierten Verformungsbereich (50) aufweist, der eine S-Form aufweist.

3. Kochgefäß (1) nach einem der vorstehenden Ansprüche, **dadurch gekennzeichnet, dass** der Träger (40) ein Befestigungsteil (41) aufweist, das in einem Sitz (29) des Griffs (20) angeordnet ist, und dass der Träger (40) einen programmierten Verformungsbereich aufweist, der durch zwei gegenüberliegend an dem Befestigungsteil (41) angeordnete flexible Laschen (55a, 55b) gebildet ist und der mit zwei Anlageflächen (16a, 16b) des Sitzes (29) des Griffs (20) zusammenwirkt.

4. Kochgefäß (1) nach Anspruch 3, **dadurch gekennzeichnet, dass** die zwei flexiblen Zungen (55a, 55b) zwei winkelförmige freie Enden (56a, 56b) aufweisen, die Antirückkehrmittel vom Harpunentyp bilden, sobald das Befestigungsteil (41) in den Sitz eingesetzt ist.

5. Kochgefäß (1) nach einem der vorstehenden Ansprüche, **dadurch gekennzeichnet, dass** der Träger (40) aus einem metallischen Material, insbesondere einem nichtferromagnetischen austenitischen rostfreien Stahl besteht.

6. Kochgefäß (1) nach einem der vorstehenden Ansprüche, **dadurch gekennzeichnet, dass** der Teil zum Halten (42) des Sensors und des leitfähigen Elements einen im Wesentlichen konstanten Querschnitt insbesondere in Form einer abgeflachten U-Form aufweist.

7. Kochgefäß (1) nach einem der vorstehenden Ansprüche, **dadurch gekennzeichnet, dass** der Träger (40) Laschen (48) zum Halten des leitfähigen Elements (31, 32) aufweist.

8. Kochgefäß (1) nach einem der vorstehenden Ansprüche, **dadurch gekennzeichnet, dass** der Sensor (30) und ein Teil des leitfähigen Elements (31, 32) in einem metallischen rohrförmigen Mantel (33) eingekapselt sind, und dass der Träger (40) zwei Laschen (46a, 46b) zur Befestigung des rohrförmigen Mantels (33) aufweist, wobei die beiden Laschen (46a, 46b) zur Befestigung eine Federwirkung zum Halten des rohrförmigen Mantels (33) auf dem Träger (40) aufweisen.

9. Kochgefäß (1) nach einem der vorstehenden Ansprüche, **dadurch gekennzeichnet, dass** die Seitenwand (4) eine Nut (5) aufweist, und dass das Teil (42) zum Halten des Sensors und des leitfähigen Elements in der Nut (5) angeordnet ist.

10. Kochgefäß (1) nach einem der vorstehenden Ansprüche, **dadurch gekennzeichnet, dass** die Mittel zum Befestigen des Griffs an der Kalotte einen Bolzen (6) umfassen, der an die Kalotte angeschweißt ist, wobei der Bolzen (6) mit einem Sitz (22) in dem Griff (20) zusammenwirkt.

11. Kochgefäß (1) nach einem der vorstehenden Ansprüche, **dadurch gekennzeichnet, dass** der Sensor (30) ein Temperatursensor, insbesondere ein CTN oder ein Thermoelement, ist.

12. Kochgefäß (1) nach einem der Ansprüche 1 bis 11, **dadurch gekennzeichnet, dass** es eine Pfanne, ein Kochtopf, eine Bratpfanne, ein Schmortopf oder ein Schnellkochtopf ist.

## Claims

1. Cooking vessel (1) comprising a body (2) equipped with a bottom (3) and a side wall (4), a handle (20) fastened to the body (2) by fastening means (6, 22), and a sensor (30) arranged in a receiving recess (11) near the bottom (3) and provided with at least one electrically-insulated conducting element (31, 32), said sensor (30) and said conducting element (31, 32) being fastened to a support (40) which extends from the bottom (3) along the side wall (4) and which is fastened to the handle (20), **characterised in that** the support (40) comprises a retaining part (42) for retaining the sensor and the conducting element, and at least one programmed deformation area (50, 55a, 55b) to allow mobility between the sensor- and conducting element-retaining part (42) and the handle (20) in at least one direction.

2. Cooking vessel (1) according to claim 1, **characterised in that** the support (40) comprises an S-shaped programmed deformation area (50).

3. Cooking vessel (1) according to any one of the previous claims, **characterised in that** the support (40) comprises a fastening part (41) arranged in a recess (29) of the handle (20) and **in that** the support (40) comprises a programmed deformation area formed by two flexible tongues (55a, 55b) arranged opposite one another on the fastening part (41), and which engage with two bearing surfaces (16a, 16b) of the recess (29) of the handle (20).

4. Cooking vessel (1) according to claim 3, **characterised in that** the two flexible tongues (55a, 55b) comprise two angular free ends (56a, 56b) which form reverse locking means of the fin type once the fastening part (41) is inserted into the recess.

5. Cooking vessel (1) according to any one of the previous claims, **characterised in that** the support (40) is made of a metal material, in particular an austenitic, nonferromagnetic stainless steel.

6. Cooking vessel (1) according to any one of the previous claims, **characterised in that** the sensor- and conducting element-retaining part (42) has a substantially constant cross-section, in particular having the shape of a flattened U.

7. Cooking vessel (1) according to any one of the previous claims, **characterised in that** the support (40) comprises retaining tabs (48) for retaining the conducting element (31, 32).

8. Cooking vessel (1) according to any one of the previous claims, **characterised in that** the sensor (30) and a part of the conducting element (31, 32) are encapsulated in a tubular metal sheath (33), and **in that** the support (40) comprises two fastening tabs (46a, 46b) for fastening the tubular sheath (33), the two fastening tabs (46a, 46b) having a retaining spring effect for retaining the tubular sheath (33) on the support (40).

9. Cooking vessel (1) according to any one of the previous claims, **characterised in that** the side wall (4) comprises a groove (5) and **in that** the sensor- and conducting element-retaining part (42) is arranged in the groove (5).

10. Cooking vessel (1) according to any one of the previous claims, **characterised in that** the means for fastening the handle on the body comprise a lug (6) welded to the body, said lug (6) engaging with a recess (22) in the handle (20).

11. Cooking vessel (1) according to any one of the previous claims, **characterised in that** the sensor (30) is a temperature sensor, in particular an NTC thermistor or a thermocouple.

12. Cooking vessel (1) according to any one of claims 1 to 11, **characterised in that** it is included in the group constituted from a frying pan, a saucepan, a skillet, a stewpot or a pressure cooker.
